# EUROPÄISCHE PATENTANMELDUNG

(11) **EP 4 446 490 A1**
(43) Veröffentlichungstag der Anmeldung: **16.10.2024**
(21) Anmeldenummer: 24163154.8
(22) Anmeldetag: 13.03.2024
(51) Int. Cl.: D06F 34/14, D06F 39/10, B01D 29/76, B01D 35/143, B01D 37/04, B01D 29/82

(54) **COMPUTERIMPLEMENTIERTES VERFAHREN ZUR BESTIMMUNG VON INFORMATIONEN ÜBER EINEN ENTWÄSSERUNGSVORGANG EINES FILTERKUCHENS IN EINEM FILTERSYSTEM EINES WASSERFÜHRENDEN HAUSHALTSGERÄTS, COMPUTERPROGRAMM UND WASSERFÜHRENDES HAUSHALTSGERÄT**

(30) Priorität: 14.04.2023 DE 102023203402
(71) Anmelder: BSH Hausgeräte GmbH, 81739 München (DE)
(72) Erfinder: Kerner, Simon, 13409 Berlin (DE); Beckmann, Tyl, 10777 Berlin (DE)

(57) **Zusammenfassung**

Vorgeschlagen wird ein computerimplementiertes Verfahren zur Bestimmung von Informationen über einen Entwässerungsvorgang von Partikeln in einem Filtersystem (1) eines wasserführenden Haushaltsgeräts (2), umfassend: Empfangen eines Entwässerungsbefehls zur Entwässerung der Partikel, Durchführen oder zumindest initiieren des Entwässerungsvorgangs, um die Partikel zu entwässern oder einen Entwässerungsvorgang zu starten, Detektieren des aus dem Filtersystem (2) austretenden Filtrats, um Filtratinformationen zu erlangen, und Bestimmen von Informationen über den Entwässerungsvorgang basierend auf den Filtratinformationen.

## Beschreibung

Die vorliegende Erfindung betrifft ein computerimplementiertes Verfahren zur Bestimmung von Informationen über einen Entwässerungsvorgang von Partikel in einem Filtersystem eines wasserführenden Haushaltsgeräts, ein Computerprogramm sowie ein wasserführendes Haushaltsgerät.

Aus dem Stand der Technik ist es bereits bekannt, wasserführende Haushaltssysteme mit Filtersystemen zur Filtration von diversen Partikeln auszustatten. Beispielsweise ist es bei als Wäschepflegeräten ausgestalteten wasserführenden Haushaltsgeräten erforderlich, Flusen und anderweitige Partikel, beispielsweise Mikroplastik, auszufiltern. Die Filterung ist zum einen notwendig, um Beschädigungen am wasserführenden Haushaltsgerät zu vermeiden und zum anderen, um zu verhindern, dass die Partikel in den Wasserkreislauf gelangen. Filtersysteme haben sich also dahingehend bewährt, Verunreinigungen in wasserführenden Haushaltsgeräten zu verhindern oder zumindest zu reduzieren und insofern eine zuverlässige Verwendung der wasserführenden Haushaltsgeräte zu ermöglichen. Üblicherweise werden die Filtersysteme manuell durch einen Benutzer gesäubert bzw. entleert. Wesentlich ist dabei auch, die Säuberung bzw. eine Regeneration des Filtersystems mehr oder weniger regelmäßig durchzuführen, um ein Zusetzten des Filtersystems zu unterbinden und so Beschädigungen des wasserführenden Haushaltsgeräts zu vermeiden oder zumindest einen ordnungsgemäßen Betrieb des wasserführenden Haushaltsgeräts zu gewährleisten. Um solche Filter betriebsbereit zu halten, gibt es bereits geräteinterne Reinigungsprozesse bzw. Regenerationsprozess. Während solchen Prozesses, ist ein Programmablauf oft gestoppt, da während dieser Zeit der Filter nicht genutzt werden kann.

Es ist daher wünschenswert, feststellen zu können, ob ein Regenerationsprozess des Filtersystems abgeschlossen ist oder nicht.

Eine Aufgabe der Erfindung ist es, ein Verfahren bereitzustellen, das die Ermittlung eines Zustands eines Filtersystems in einem wasserführenden Haushaltsgerät ermöglicht. Eine Aufgabe der Erfindung kann weiterhin darin gesehen werden, ein Verfahren zu einem ordnungsgemäßen Betrieb eines wasserführenden Haushaltsgeräts bereitzustellen, bei dem ein Auftreten von Betriebsstörungen reduziert werden kann. Eine Aufgabe der Erfindung kann zudem darin gesehen werden, ein wasserführendes Haushaltsgerät bereitzustellen, bei dem ein ordnungsgemäßer Betrieb mit verringertem Auftreten von Betriebsstörungen ermöglicht werden kann.

Gemäß einem Aspekt der vorliegenden Erfindung wird ein computerimplementiertes Verfahren zur Bestimmung von Informationen über einen Entwässerungsvorgang von Partikeln in einem Filtersystem eines wasserführenden Haushaltsgeräts bereitgestellt, umfassend: Empfangen eines Entwässerungsbefehls zur Entwässerung der Partikel, Durchführen oder zumindest Initiieren des Entwässerungsvorgangs, um die Partikel zu entwässern oder einen Entwässerungsvorgang zu starten, Detektieren des aus dem Filtersystem austretenden Filtrats, um Filtratinformationen zu erlangen, und Bestimmen von Informationen über den Entwässerungsvorgang basierend auf den Filtratinformationen.

Das erfindungsgemäße Verfahren sieht in einem ersten Schritt das Empfangen eines Entwässerungsbefehls zur Entwässerung des Filterkuchens vor. Der Entwässerungsbefehls kann aufgrund eines anstehenden oder abgelaufenen Programmpunkts des wasserführenden Haushaltsgeräts ausgegeben werden. Damit kann das Filtersystem immer betriebsbereit gehalten werden für anstehende Betriebszustände des wasserführenden Haushaltsgeräts.

Die Partikel können auch als Filterkuchen bezeichnet werden. Ein Filterkuchen kann so definiert werden, dass es eine Ansammlung von Partikeln ist, welche von einem Filterelement zurückgehalten werden. Der Filterkuchen kann also in dem Filtersystem angeordnet sein. Vorteilhaft kann vorgesehen sein, dass der Filterkuchen in einem Filterbeutel angeordnet ist, der in dem Filtersystem angeordnet ist. So kann eine besonders einfache, zügige und zuverlässige Entnahme des Filterkuchens aus dem Filtersystem ermöglicht werden. Insbesondere kann eine rückstandfreie Entnahme des Filterkuchens bzw. von Partikeln, die der Filterkuchen umfasst, ermöglicht werden.

In einem darauffolgenden zweiten Schritt sieht das Verfahren vorzugsweise das Durchführen oder zumindest das Initiieren des Entwässerungsvorgangs vor, um den Filterkuchen zu entwässern oder den Entwässerungsvorgang zu starten. Damit kann verbleibende Flüssigkeit aus den ausgefilterten Partikeln ausgetragen werden. Vorzugsweise wird die Flüssigkeit ausgepresst.

Ein darauffolgender dritter Schritt des Verfahrens sieht vorzugsweise das Detektieren des aus dem Filtersystem austretenden Filtrats vor, um Filtratinformationen zu erlangen. Das austretende Filtrat kann insbesondere als Fluidstrom erfasst werden. Filtratinfomationen können Durchflussrichtung und/oder Durchflussmenge des Filtrats umfassen. Filtrat kann derjenige Teil des dem Filtersystem zugeführten Fluids sein, der das Filterelement passieren kann.

In einem darauffolgenden vierten Schritt kann die Bestimmung von Informationen über den Entwässerungsvorgang basierend auf den Filtratinformationen erfolgen. Informationen über den Entwässerungsvorgang können bevorzugt Informationen über einen Wassergehalts des Filtersystems und/oder des in dem Filtersystem angeordneten Filterkuchens beinhalten. Alternativ oder ergänzend können Informationen über den Entwässerungsvorgang bevorzugt Informationen zu einer Filterregeneration beinhalten.

Gemäß einem Aspekt der vorliegenden Erfindung kann also vorgesehen sein, dass beim Entwässern des Filterkuchens Filtrat austritt und erfasst wird. Basierend auf dem austretenden Filtrat kann dann im Rückschluss die Bestimmung erfolgen, in welchem Zustand sich die Entwässerung der Partikel in dem Filtersystem befindet. Beispielsweise kann so bestimmt werden, wann eine Entwässerung des Filtersystems abgeschlossen oder nahezu abgeschlossen ist. Dazu kann eine Änderungsrate des Filtrats erfasst werden. Sobald keine Änderung bei der Erfassung des Filtrats, insbesondere aus dem Filterkuchen austretendes Filtrat, detektierbar ist bzw. detektiert wird, kann darauf geschlossen werden, dass eine Entwässerung abgeschlossen ist. Eine Filterregeneration kann sodann als beendet angesehen werden und diese Information kann dazu genutzt werden, nachfolgende Prozesse, die in einem wasserführenden Haushaltsgerät durchgeführt werden, insbesondere Schleudervorgänge, freizugeben. Die entwässerten Partikel (Filterkuchen) können dann aus dem Filtersystem ausgetragen werden oder in einem Filterdepot gelagert werden. Beispielsweise ist es denkbar, dass das oben beschriebene Filtersystem ein Hauptfilter eines wasserführenden Haushaltsgeräts ist. In einer Ausführungsform ist das Filterelement ein Sekundärfilter, welchem ein Partikel-Fluid-Gemisch von einem Primärfilter zugeführt wird, ist. Ein regenerierter Filter bzw. ein regeneriertes Filtersystem kann als Filtersystem aufgefasst und bezeichnet werden, das gereinigt ist und das insbesondere im Wesentlichen frei von Partikeln und/oder einem Filterkuchen, der Partikel umfasst, ist.

Neben einem ordnungsgemäßen Betrieb können sich weitere vorteilhafte Aspekte durch das erfindungsgemäße Verfahren ergeben. So kann bei der Verwendung des wasserführenden Haushaltsgeräts Energie und Zeit eingespart werden, da durch einen, insbesondere regelmäßig und vorzugsweise vollständig regenerierten Filter ein optimaler Betrieb des Haushaltgeräts gewährleistet ist. Damit einhergehend können beispielsweise nachfolgende Schleuder- und Entwässerungsprozesse in einem wasserführenden Haushaltsgerät zügiger ausgeführt werden. Zudem kann eine rein zeitgesteuerte Prozessführung entfallen. Vielmehr kann genauer bestimmt werden, wann ein Entwässerungsprozess beendet ist. Vorteilhaft kann zudem auf die Verwendung einer zusätzlichen Sensorik verzichtet werden, indem eine angepasste Programmierung des wasserführenden Haushaltsgeräts erfolgt und zur Detektion bereits vorhandene Sensorik herangezogen wird. Durch einen Verzicht zusätzlicher Sensorik kann eine Fehleranfälligkeit des wasserführenden Haushaltsgeräts reduzierbar sein. Insofern kann ein ordnungsgemäßer Betrieb des wasserführenden Haushaltsgeräts ermöglicht werden.

Das erfindungsgemäße Verfahren kann in einer vorteilhaften Weiterbildung vorsehen, dass Prozesse, die nach einer Filtergeneration vorgesehen sind, abhängig von der Bestimmung von Informationen über den Entwässerungsvorgang basierend auf den Filtratinformationen freigegeben werden. Besonders bevorzugt kann vorgesehen sein, dass Prozesse, die nach einer Filtergeneration vorgesehen sind, nach einer Bestimmung, dass die Filtergeneration vollständig oder nahezu vollständig durchgeführt worden ist, freigegeben werden. Die Bestimmung von Informationen über den Entwässerungsvorgang basierend auf den Filtratinformationen kann somit vorteilhaft als Prüfinstanz für nachfolgende Prozesse herangezogen werden. Vorteilhaft kann eine verbesserte Prozessführung im wasserführenden Haushaltsgerät ermöglicht werden.

Besonders bevorzugt kann vorgesehen sein, dass die Detektion des Filtrats in einer Durchströmrichtung stromabwärts des Filtersystems erfolgt. Ein stromabwärts detektiertes Filtrat kann besonders bevorzugt als Fluidstrom detektierbar sein bzw. detektiert werden. So können Informationen über einen Entwässerungsvorgang eines Filterkuchens in einem Filtersystem eines wasserführenden Haushaltsgeräts zuverlässig bestimmt werden. Besonders bevorzugt ist zur Detektion des Filtrats zumindest eine Detektiereinheit vorgesehen bzw. umfasst.

In einer besonders vorteilhaften Ausgestaltung der Erfindung kann vorgesehen sein, dass das Detektieren des Filtrats mittels Durchflussmessung erfolgt. Vorzugsweise ist zumindest eine Einheit zur Durchführung einer Durchflussmessung vorgesehen. Eine Einheit zur Durchführung einer Durchflussmessung kann vorteilhaft als Durchflusssensor ausgestaltet sein.

Die Erfassung des Filtrats mittels Durchflussmessung ist eine zuverlässige Methode, die zudem mit hoher Genauigkeit an beliebigen Positionen, vorzugsweise in einem Innenraum des wasserführenden Haushaltsgeräts, durchgeführt werden kann.

Eine Durchflussmessung kann über einen Differenzdruck erfolgen. Alternativ oder ergänzend kann eine Durchflussmessung als Flow-Messung nach dem thermischen Prinzip erfolgen. Diese Messungen sind zuverlässig und präzise durchführbar und können damit wesentlich zu einem ordnungsgemäßen Betrieb des wasserführenden Haushaltsgeräts beitragen.

In einer weiteren besonders vorteilhaften Ausgestaltung kann das Detektieren des Filtrats mittels Volumenmessung erfolgen. Vorzugsweise ist zumindest eine Einheit zur Durchführung einer Volumenmessung vorgesehen. Eine Einheit zur Durchführung einer Volumenmessung ist vorteilhaft als Füllstandsensor ausgestaltet.

Die Detektion des Filtrats mittels Volumenmessung kann vorteilhaft in einem bereits vorhandenem Behälter des wasserführenden Haushaltsgeräts mittels zumindest eines Füllstandsensors erfolgen. Vorteilhaft kann für diesen Zweck ein bereits vorhandener Füllstandsensor herangezogen werden. Hierdurch können Komponenten eingespart werden. Dies kann sich vorteilhaft auf eine verringerte Fehleranfälligkeit des wasserführenden Haushaltsgeräts auswirken. Insbesondere können auch Wartungsintervalle des wasserführenden Haushaltsgeräts verlängert werden.

Weiterhin kann in einer vorteilhaften Ausgestaltung vorgesehen sein, dass das Detektieren des Filtrats mittels Durchflussmessung und mittels Volumenmessung erfolgt. Vorzugsweise ist hierzu zumindest eine Einheit zur Durchführung einer Durchflussmessung vorgesehen. Eine Einheit zur Durchführung einer Durchflussmessung ist vorteilhaft als Durchflusssensor ausgestaltet. Vorzugsweise ist hierzu zusätzlich zumindest eine Einheit zur Durchführung einer Volumenmessung vorgesehen. Eine Einheit zur Durchführung einer Volumenmessung ist vorteilhaft als Füllstandsensor ausgestaltet. Der Füllstandsensor kann in einem Laugenbehälter eines Wäschebehandlungsgeräts angeordnet sein. Vorzugsweise kann ein bereits in dem Wäschebehandlungsgeräts vorhandener Füllstandsensor genutzt werden. Dadurch kann das Detektieren des Filtrats ohne zusätzliche Equipment realisiert sein.

Derart kombinierte Messungen können eine verbesserte Genauigkeit der Detektion eines Filtrats ermöglichen. Zudem kann eine weitere Erfassung von Filtrat selbst bei Ausfall eines Sensors, d.h. Durchflusssensor oder Füllstandsensor, sichergestellt werden.

Eine besonders vorteilhafte Ausgestaltung kann vorsehen, dass das Detektieren des Filtrats über Konduktivmessung erfolgt. Vorzugsweise ist hierzu zumindest ein konduktiver Füllstandsensor umfasst bzw. vorgesehen. Konduktive Füllstandsensoren können einfache, sichere und zuverlässige Grenzstanddetektion in leitfähigen Fluiden, insbesondere Wasser, bieten. Vorteilhaft kann auf eine Kalibrierung verzichtet werden und es sind zudem keine beweglichen Teile in einem Fluidtank oder dergleichen Behälter des wasserführenden Haushaltsgeräts erforderlich. Konduktive Füllstandsensoren können ferner sehr robust und langlebig sein und können vorteilhaft einen zuverlässigen Betrieb ohne Betriebsstörungen des wasserführenden Haushaltsgeräts ermöglichen.

In einer Weiterbildung der Erfindung kann vorgesehen sein, dass die Detektion des Filtrats als Grenzstanddetektion durchgeführt wird. Die Grenzstanddetektion kann vorteilhaft mit sehr hoher Präzision durchführbar sein.

In einer überdies vorteilhaften Weiterbildung kann vorgesehen sein, dass die Detektion des Filtrats mittels kapazitiver Füllstandsmessung erfolgt. Insbesondere kann vorgesehen sein, dass ein kapazitiver Sensor und ein Fluidtank oder dergleichen Behälter des wasserführenden Haushaltsgeräts einen Kondensator bilden, dessen Kapazität abhängig ist von der Füllmenge im Fluidtank. Dabei weist ein leerer Fluidtank eine niedrigere, ein gefüllter Fluidtank eine höhere Kapazität auf. Besonders bevorzugt kann vorgesehen sein, dass der Fluidtank als Laugenbehälter eines als Wäschepflegegerät ausgestaltetes wasserführendes Haushaltsgerät ausgestaltet ist. Eine kapazitive Füllstandsmessung kann vorteilhaft sehr genaue Messergebnisse liefern.

In einer weiteren vorteilhaften Ausgestaltung der Erfindung kann vorgesehen sein, dass die Detektion des Filtrats mittels hydrostatischer Füllstandsmessung erfolgt. Insbesondere kann vorgesehen sein, dass zumindest ein Drucksensor umfasst bzw. vorgesehen ist, der einen Füllstand in einem Fluidtank oder dergleichen Behälter des wasserführenden Haushaltsgeräts erfasst und einen hydrostatischen Druck erfasst, der von der Masse des Fluids in dem Fluidtank abhängt und proportional zum Füllstand steigt. Eine hydrostatische Füllstandsmessung kann vorteilhaft sehr präzise ausgeführt werden.

In einer Weiterbildung der Erfindung kann auch vorgesehen sein, dass die Detektion des Filtrats mittels hydrostatischer Füllstandsmessung und mittels kapazitiver Füllstandsmessung erfolgt. Neben einer hochpräzisen Erfassung des Filtrats kann die Kombination von zumindest zwei Messmethoden eine erhöhte Zuverlässigkeit ermöglichen.

In einer weiteren vorteilhaften Ausgestaltung der Erfindung kann vorgesehen sein, dass die Detektion des Filtrats in einem Fluidtank oder dergleichen Behälter, vorzugsweise in einem Laugenbehälter eines als Wäschepflegegerät ausgestalteten wasserführenden Haushaltsgeräts, wobei zusätzlich erfasst wird, ob ein vorgegebener Füllstand in dem Fluidtank einen vorgegebenen Füllstandwert überschreitet.

Eine weitere, besonders vorteilhafte Ausgestaltung der Erfindung kann vorsehen, dass das Detektieren des Filtrats durch zumindest einen Sensor erfolgt, der ausgesandte Ultraschallimpulse, die von einer Oberfläche des Filtrats reflektiert werden, erfasst.

In einer vorteilhaften Weiterbildung der Erfindung kann vorgesehen sein, dass die Detektion des Filtrats mittels Ultraschall-Füllstandsmessung erfolgt. Vorzugsweise erfolgt die Detektion des Filtrats dabei auf einer Laufzeitmessung, wobei die durch einen Sensor ausgesandten Ultraschallimpulse von der Oberfläche des Fluids, insbesondere Wasser, reflektiert und wieder vom Sensor erfasst werden. Die Laufzeit des reflektierten Ultraschallsignals ist direkt proportional zum zurückgelegten Weg. Vorteilhaft kann der Füllstand unter Berücksichtigung einer bekannten Geometrie des Fluidtanks präzise ermittelt werden, insbesondere durch Berechnung.

In einer weiteren vorteilhaften Weiterbildung der Erfindung kann vorgesehen sein, dass das Detektieren des Filtrats durch Erfassung einer Luftkomprimierung erfolgt. Insbesondere kann vorgesehen sein, dass die Detektion des Filtrats durch eine Druckveränderung erfolgt, die durch eine Luftkomprimierung hervorgerufen wird. Vorzugsweise ist zumindest ein Drucksensor und zumindest eine Luftkomprimierungseinheit vorgesehen bzw. umfasst.

Vorzugsweise erfolgt das Detektieren des Filtrats mittels Durchflussmessung, mittels Volumenmessung, Konduktivmessung und/oder Ultraschallmessung. Somit kann das Detektieren, wie oben beschrieben auch durch einzelne Methoden oder durch eine Kombination mehrerer Methoden realisiert sein.

Vorzugsweise wird das Detektieren des Filtrats durch Überwachung eines Fluidlevels in einem dem Filtersystem nachgelagerten Behälters erfolgt, wobei das Filtrat dem Behälter zugeführt. Der Behälter kann also stromabwärts des Filters angeordnet sein. Der Behälter kann bereits zumindest teilweise mit Flüssigkeit gefüllt werden, wobei das Filtrat aus dem Filter zusätzlich dem Behälter zugeführt werden kann.

Vorzugsweise umfasst das Bestimmen von Informationen über den Entwässerungsvorgang eine Berücksichtigung einer Änderung der Filtratinformationen. Somit kann ein verbauter Sensor verwendet werden, um zusätzlich zu einer anderen Funktion die Filtratinformationen zu erlangen. Beispielsweise kann ein Füllstandssensor verwendet werden, der normalerweise für eine Programmsteuerung oder dergleichen in einem Haushaltsgerät verbaut ist, um die Filtratinformationen zu erlangen.

Vorzugsweise umfasst das Verfahren ein Ausgeben eines Freigabebefehls basierend auf den Informationen über den Entwässerungsvorgang. Somit kann der weitere Programmablauf basierend auf den Informationen über den Entwässerungsvorgang vorzeitig gestartet werden oder verzögert werden. Dadurch kann ein effizienter Betrieb des Haushaltsgeräts erfolgen.

In einer weiteren vorteilhaften Weiterbildung der Erfindung kann vorgesehen sein, dass das Detektieren des Filtrats kontinuierlich erfolgt. Eine kontinuierliche Detektion kann eine zügige Erfassung von Änderungen des Fluidstroms ermöglichen. Vorteilhaft können durch kontinuierliche Messungen deutlich höher Messgenauigkeiten erreichbar sein. Messungen bzw. Erfassungen des Fluidstroms sind kontinuierlich, wenn erfasste bzw. zu erfassende Messgrößen zeitlich ununterbrochen erfasst und vorzugsweise weitergeleitet werden.

Alternativ kann in einer weiteren vorteilhaften Weiterbildung der Erfindung vorgesehen sein, dass das Detektieren des Filtrats in Intervallen erfolgt. In Intervallen erfolgte Messungen bzw. Erfassungen des Fluidstroms erfolgen mit zeitlich definierten Unterbrechungen, sind also diskontinuierlich.

Vorzugsweise wird das aus dem Filtersystem austretende Fluid in Abständen von 0,5 s bis 2 s, vorzugsweise in einem Beriech von 1 s bis 2 s detektiert. Damit können die Filtratinformationen in bestimmten Abständen erfasst werden. Durch ein Auftragen über der Zeit kann eine Änderungsrate bestimmt werden. In dem ersten angegeben Bereich hat sich gezeigt, dass eine Änderungsrate ausreichend genau bestimmt werden kann, ohne eine Unmenge an Daten, welche eine entsprechende Rechenkapazität voraussetzen, zu erzeugen. Der zweite Bereich hat sich bei einem Wäschepflegegerät als besonders vorteilhaft herausgestellt, da hier bei einer Messung mit einem Füllstandsensor im Laugenbehälter die besten Ergebnisse erzielt werden konnten, um zu bestimmen, wann ein Entwässerungsvorgang beendet ist.

Besonders bevorzugt kann vorgesehen sein, dass die Detektion in einer Fluidleitung des wasserführenden Haushaltsgeräts erfolgt, die mit dem Filtersystem fluidtechnisch verbunden ist. Die Fluidleitung ist kommunizierbar mit dem Filtersystem angeordnet. Vorteilhaft kann eine flexiblere Detektion von Filtrat erfolgen. Alternativ oder ergänzend kann die Detektion in einem Fluidtank oder dergleichen Behälter des wasserführenden Haushaltsgeräts erfolgen. Der Fluidtank ist fluidtechnisch mit dem Filtersystem verbunden. Der Fluidtank ist kommunizierbar mit dem Filtersystem ausgebildet.

Besonders bevorzugt ist zur Durchführung des Entwässerungsvorgangs zumindest eine Entwässerungseinheit vorgesehen.

Eine überdies vorteilhafte Weiterbildung kann vorsehen, dass das Durchführen des Entwässerungsvorgangs mittels einem volumenveränderlichen Verdrängungsmittel erfolgt. Das volumenveränderliche Verdrängungsmittel kann als Entwässerungseinheit zur Durchführung einer Entwässerung des Filtersystems, insbesondere des in dem Filtersystem angeordneten Filterkuchens, ausgebildet und vorgesehen sein.

In einer besonders vorteilhaften Ausgestaltung kann vorgesehen sein, dass das Filtrat durch Verdrängung von in dem Filtersystem vorhandenem Fluid erfolgt oder zumindest initiiert wird. Die Verdrängung kann mit geringem konstruktiven Aufwand und insbesondere mit geringer Fehleranfälligkeit vorzugsweise durch zumindest ein Verdrängungsmittel erfolgen. Das zumindest eine Verdrängungsmittel ist vorzugsweise als volumenveränderliches Verdrängungsmittel ausgestaltet.

In einer bevorzugten Ausgestaltung kann das volumenveränderliche Verdrängungsmittel aus einem elastischen Material gefertigt sein oder zumindest ein elastisches Material umfassen. Besonders bevorzugt kann vorgesehen sein, dass das volumenveränderliche Verdrängungsmittel aus einem gummielastischen Material gefertigt ist oder zumindest ein gummielastisches Material umfasst. Ein derartiges Verdrängungsmittel aus einem gummielastischem Material ist insbesondere als Ballon ausgestaltet. Vorteilhaft kann ein derartiges volumenveränderliches Verdrängungsmittel einfach getauscht werden, beispielsweise bei Wartungsarbeiten und/oder zu Reparaturzwecken.

In einer besonders vorteilhaften Weiterbildung kann vorgesehen sein, dass das volumenveränderliche Verdrängungsmittel mit einem Fluid befüllbar und/oder befüllt ist. Als Fluide sind insbesondere ein Gas oder ein Gasgemisch vorgesehen. Als Gase sind insbesondere inerte Gase wie Stickstoff oder Edelgase vorteilhaft aufgrund sehr geringer Reaktivität. Stickstoff ist zudem kostengünstig bereitstellbar. Als Gasgemisch ist insbesondere Luft oder ein Gemisch, das Luft umfasst, vorgesehen. Vorgesehen kann auch ein Kompressor oder dergleichen Zuführmittel von Fluid, insbesondere Gas oder Gasgemisch, sein.

In einer besonders bevorzugten Ausgestaltung kann demnach vorsehen, dass die Entwässerung durch Verdrängung, insbesondere durch Ausdehnung des Verdrängungsmittels, vorzugsweise mittels eines gasförmigen Mediums, erfolgt. Insbesondere kann vorgesehen sein, dass die Entwässerung durch Verdrängung und Auspressen des Filterkuchens mittels eines volumenveränderlichen Verdrängungsmittels erfolgt, wobei das Verdrängungsmittel ein gasförmiges Medium umfasst. Eine derartige Entwässerung kann konstruktiv einfach und mit geringer Fehleranfälligkeit bewerkstelligt werden.

Alternativ oder ergänzend kann auch vorgesehen sein, dass das Fluid eine Flüssigkeit umfasst. Besonders vorteilhaft kann dabei vorgesehen sein, dass als Flüssigkeit Wasser oder ein Gemisch, das zumindest spurenweise Wasser umfasst, verwendet wird. Derartige Flüssigkeiten sind mit wasserführenden Haushaltsgeräten besonders kompatibel und können daher die Fehleranfälligkeit des wasserführenden Haushaltsgeräts bei einem etwaigen Defekt des volumenveränderlichen Verdrängungsmittels zumindest nicht weiter erhöhen.

Das volumenveränderliche Verdrängungsmittel kann Fluid in dem Filtersystem, insbesondere aus einem in dem Filtersystem angeordneten Filterkuchens, vorzugsweise durch Volumenvergrößerung verdrängen. Eine Volumenvergrößerung kann durch zumindest teilweise Befüllung des volumenveränderlichen Verdrängungsmittels erfolgen.

Das volumenveränderliche Verdrängungsmittel kann als Entwässerungseinheit des wasserführenden Haushaltsgeräts, insbesondere als Entwässerungseinheit zur zumindest teilweisen, vorzugsweise vollständigen oder zumindest nahezu vollständigen Entwässerung des Filtersystems, besonders bevorzugt einer Primärfilterstufe und/oder einer Sekundärfilterstufe eines zweistufigen Filtersystems, aufgefasst und bezeichnet werden.

In einer weiteren vorteilhaften Ausgestaltung kann möglich sein, dass die Erzeugung des Filtrats durch druckbeaufschlagtes Entfernen von Fluid aus dem zumindest einen Filtersystem, insbesondere zusätzlich aus zumindest einem, in dem Filtersystem angeordneten Filterkuchen, erfolgt oder zumindest initiiert wird. Hierbei kann möglich sein, dass das zumindest eine Filtersystem als einstufiges Filtersystem oder als mehrstufiges Filtersystem, insbesondere als zweistufiges Filtersystem ausgestaltet ist. Mit anderen Worten kann die Erzeugung des Filtrats pneumatisch erfolgen.

Besonders bevorzugt ist das Filtersystem als zweistufiges Filtersystem ausgestaltet und umfasst eine erste Filterstufe (Primärfilter) und eine zweite Filterstufe (Sekundärfilter). Vorzugsweise werden Partikel in der ersten Stufe aufkonzentriert, insbesondere zu dem Filterkuchen, und zu einer Reinigung zu einer zweiten Filterstufe transportiert, vorzugsweise mittels Abpumpen durch Verwendung einer Pumpeinheit.

In einer vorteilhaften Weiterbildung der Erfindung kann vorgesehen sein, dass das Filtersystem zumindest einen Filterbeutel umfasst. Vorzugsweise ist der Filterbeutel lösbar in dem Filtersystem angeordnet. Der Filterbeutel ist als austauschbare Filtereinheit in dem Filtersystem angeordnet. Vorzugsweise werden Partikel, die in dem Filtersystem gefiltert werden, in dem Filterbeutel als Filterkuchen gesammelt. Besonders bevorzugt ist der Filterbeutel vorgesehen, um den Filterkuchen aufzunehmen. Der Filterbeutel kann in der ersten Filterstufe und/oder in der zweiten Filterstufe angeordnet sein. Vorteilhaft kann die Verwendung eines Filterbeutels eine zuverlässige Filtration ermöglichen. Weiterhin vorteilhaft kann ein Filterbeutel einfach und kostengünstig getauscht werden. Vorteilhaft kann ferner ein ordnungsgemäßer Betrieb des wasserführenden Haushaltsgeräts ermöglicht werden.

Die Erfindung kann in einer vorteilhaften Ausgestaltung vorsehen, dass ein Filterbeutel, der in dem Filtersystem angeordnet ist und einen Filterkuchen aufweist, zumindest teilweise, vorzugsweise vollständig oder nahezu vollständig gemäß den vorstehend beschrieben Methoden, die, sofern sinnvoll und nicht gegenseitig ausschließend, miteinander verknüpft werden können, entwässert wird.

Der Entwässerungsvorgang eines Filterbeutels kann, wie vorstehend beschrieben, durch ein volumenveränderliches Verdrängungsmittel erfolgen.

Alternativ oder ergänzend kann der Entwässerungsvorgang des Filterbeutels durch Pressen erfolgen. Das Pressen kann durch das volumenveränderliche Verdrängungsmittel erfolgen.

Eine weitere vorteilhafte Ausgestaltung der Erfindung kann vorsehen, dass das wasserführende Haushaltsgerät ein Filtersystem mit zumindest einer ersten Filterstufe bzw. einem Primärfilter und einer zweiten Filterstufe bzw. einem Sekundärfilter umfasst, wobei zumindest eine Absperrvorrichtung zum Blockieren eines Fluidwegs zwischen der ersten Filterstufe und der zweiten Filterstufe des wasserführenden Haushaltsgeräts umfasst ist, wobei die Absperrvorrichtung zumindest eine Sperreinheit umfasst, die zwischen einer ersten Position, in welcher der Fluidweg freigegeben ist, und einer zweiten Position, in der der Fluidweg im Wesentlichen blockiert ist, beweglich ist. Auf diese Weise kann ein zuverlässiges Blockieren des Fluidwegs zwischen erster und zweiter Filterstufe ermöglicht werden. Dies kann insbesondere dann vorgesehen sein, wenn Abwasser durch das mehrstufiges Filtersystem aufbereitet wird. In einem Fall, in dem die erste Filterstufe vorgesehen ist, um Partikel aus dem Abwasser aufzukonzentrieren und die zweite Filterstufe vorgesehen ist, um das Partikelkonzentrat weiter zu entwässern und zu speichern, ist es für einen ordnungsgemäßen Betrieb des wasserführenden Haushaltsgeräts erforderlich, dass verhindert wird, dass abzupumpende Flüssigkeit in die zweite Filterstufe gelangt und diese blockiert.

In einer besonders vorteilhaften Weiterbildung der Erfindung kann vorgesehen sein, dass die Sperreinheit so ausgestaltet ist, dass sie passiv zwischen der ersten Position und der zweiten Position beweglich ist. Vorteilhaft kann eine konstruktiv vereinfachte Sperreinheit bereitgestellt werden, wodurch eine Fehleranfälligkeit des wasserführenden Haushaltsgeräts weiter reduziert werden kann.

In einer überdies besonders bevorzugten Ausgestaltung kann vorgesehen sein, dass die Absperrvorrichtung als Rückschlagklappe ausgestaltet ist. Vorgesehen sein kann alternativ oder ergänzend ferner, dass die Sperreinheit als Rückschlagklappe ausgestaltet ist. Eine derartige Ausgestaltung kann konstruktiv besonders einfach bereitgestellt werden und ein zuverlässiges Blockieren eines Fluidwegs bewerkstelligen. Vorgesehen sein kann auch, dass die Absperrvorrichtung zumindest eine Rückschlagklappe umfasst. Möglich kann ferner sein, dass die Rückschlagklappe als federbelastete Rückschlagklappe ausgestaltet ist. Vorgesehen sein kann weiterhin, dass die Rückschlagklappe zumindest ein einseitig drehbar gelagertes Dichtelement umfasst.

Somit kann in einer Weiterbildung der Erfindung auch ein wasserführendes Haushaltsgerät vorgesehen sein, umfassend zumindest eine erste Filtereinheit und eine zweite Filtereinheit, die über einen Fluidweg fluidtechnisch miteinander verbunden sind, und mit zumindest einer Absperrvorrichtung, die den Fluidweg zwischen der ersten Filtereinheit und der zweiten Filtereinheit im Wesentlichen blockierbar angeordnet ist.

Die Erfindung betrifft weiterhin ein Computerprogramm umfassend Programmcodemittel zum Durchführen des erfindungsgemäßen Verfahrens, wenn das Programm auf einer Steuereinheit ausgeführt wird. Vorzugsweise umfasst das Computerprogramm Programmcodemittel zum Durchführen aller Schritte des erfindungsgemäßen Verfahrens, wenn das Programm auf einer Steuereinheit ausgeführt wird.

Gemäß eine Aspekt der Erfindung wird ein Computerprogramm bereitgestellt, umfassend Programmcode, der, wenn er auf einer Steuereinheit ausgeführt wird, die Steuereinheit dazu veranlasst, das Verfahren gemäß einer der obigen Ausführungsformen auszuführen.

Zudem betrifft die Erfindung ein Computerprogrammprodukt umfassend Programmcodemittel, die auf einem computerlesbaren Medium gespeichert sind, um das erfindungsgemäße Verfahren durchzuführen, wenn das Programm in einer Steuereinheit läuft.

Gemäß einem weiteren Aspekt der Erfindung wird ein wasserführendes Haushaltsgerät bereitgestellt, aufweisend zumindest ein Filtersystem und eine Steuereinheit, welche dazu ausgestaltet ist, das Verfahren gemäß einer der obigen Ausführungsformen auszuführen.

Vorzugsweise umfasst das wasserführendes Haushaltsgerät einen Laugenbehälter, welchem Filtrat aus dem Filtersystem zugeführt werden kann, und ein Füllstandssensor, der dazu ausgestaltet ist, einen Fluidlevel in dem Laugenbehälter zu überwachen, wobei die Steuereinheit dazu ausgestaltet ist, basierend auf dem Fluidlevel das aus dem Filtersystem (2) austretende Filtrat zu detektieren.

Die Steuereinheit ist insbesondere vorgesehen, das erfindungsgemäße Programm auszuführen. Das wasserführende Haushaltsgerät kann ferner zumindest eine Detektiereinheit und zumindest eine Entwässerungseinheit aufweisen.

Ein wasserführendes Haushaltsgerät kann im Rahmen der vorliegenden Offenbarung insbesondere aber nicht ausschließlich als ein Wäschepflegegerät ausgestaltet sein. In einer bevorzugten Ausgestaltung der Erfindung ist das wasserführende Haushaltsgerät als Wäschepflegegerät ausgestaltet.

Vorzugsweise weist das Wäschepflegegerät ein Filtersystem auf, das zumindest einen darin anordenbaren Filterbeutel zur Sammlung eines Filterkuchens umfasst.

In einer bevorzugten Ausgestaltung der Erfindung ist das wasserführende Haushaltsgerät als Wäschepflegegerät ausgestaltet, wobei das Wäschepflegegerät eine Waschtrommel und einen Laugenbehälter aufweist, wobei das Wäschepflegegerät ferner eine Steuereinheit aufweist.

In einer bevorzugten Ausgestaltung der Erfindung weist der Laugenbehälter zumindest eine Erfassungseinheit zur Erfassung eines Füllstands in dem Laugenbehälter auf, wobei das Filtersystem und der Laugenbehälter fluidtechnisch miteinander verbunden sind, wobei bei einem Entwässerungsvorgang des Filtersystems Fluid aus dem Filtersystem, insbesondere aus einem in dem Filtersystem angeordneten Filterbeutel, der insbesondere einen Filterkuchen umfasst, in den Laugenbehälter gelangt.

Die Erfassung des Füllstands erfolgt vorzugsweise ab einem Zeitpunkt, ab dem Filtrat aus dem Filterbeutel, der in dem Filtersystem angeordnet ist, austritt und in dem Laugenbehälter durch die Erfassungseinheit erfasst wird. Besonders bevorzugt erfolgt die Erfassung durch einen in dem Laugenbehälter angeordneten Füllstandsensor. Insbesondere erfolgt die Erfassung des Füllstands in Abhängigkeit von der Erzeugung des Filtrats in dem Filtersystem, insbesondere in einem in dem Filtersystem angeordneten Filterbeutel.

In einer weiteren besonders bevorzugten Ausgestaltung ist das wasserführende Haushaltsgerät als Wäschepflegegerät ausgestaltet, das zumindest einen Laugenbehälter umfasst, in dem zumindest ein Füllstandsensor angeordnet ist. Erfindungsgemäß kann vorgesehen sein, dass die Detektion des Filtrats in dem Laugenbehälter erfolgt. Die Detektion des Filtrats in dem Laugenbehälter kann vorzugsweise mit einem bereits darin befindlichen Füllstandsensor erfolgen, wodurch ein zusätzlicher Sensor obsolet wird und eine Fehleranfälligkeit des wasserführenden Haushaltsgeräts reduzierbar sein kann.

Eine vorteilhafte Weiterbildung der Erfindung kann vorsehen, dass das Wäschepflegegerät zumindest einen Filterbeutel umfasst, der in dem Filtersystem angeordnet ist, um einen Filterkuchen aufzunehmen. Das Wäschepflegegerät weist in einer vorteilhaften Ausgestaltung der Erfindung ferner ein volumenveränderliches Verdrängungsmittel auf, der in dem Filtersystem angeordnet ist, um den Filterbeutel zu entwässern. Vorzugsweise ist der Füllstandssensor in einem Betriebszustand des wasserführendes Haushaltsgeräts an der tiefsten Stelle des Laugenbehälters, insbesondere unmittelbar angrenzend an einen Einlauf zu einer Laugenpumpe, angeordnet. Dadurch kann sichergestellt sein, dass auch bei wenig Fluid in dem Laugenbehälter eine Filtratinformation bestimmt werden kann.

Die Vorteile und Merkmale, die oben im Zusammenhand mit der Vorrichtung erläutert wurden, gelten analog auch für das Verfahren und andersherum. Einzelne Merkmale oder Aspekte der vorliegenden Erfindung können miteinander kombiniert werden und haben die in diesem Zusammenhang erläuterten Vorteile.

Im Folgenden wird die Erfindung anhand von vorteilhaften Ausführungsformen mit Bezug auf die beigefügten Figuren im Detail erläutert. Dabei zeigen:
- Fig. 1: eine schematische Darstellung des Ablaufs einer Ausführungsform des erfindungsgemäßen Verfahrens;
- Fig. 2: einen Ausschnitt einer Ausführungsform eines erfindungsgemäßen wasserführenden Haushaltsgeräts in stark vereinfachter schematischer Darstellung;
In den Figuren sind gleiche oder einander entsprechende Elemente mit den gleichen Bezugszeichen gekennzeichnet. Faktoren wie beispielsweise numerische Werte, Formen, Komponenten, Positionen von Komponenten und die Weise, wie die Komponenten miteinander verbunden sind, sind lediglich illustrativ und nicht einschränkend. In den Zeichnungen sind aus Gründen der Übersicht und zur Verbesserung der Erkennbarkeit teilweise unterschiedliche Maßstäbe verwendet.

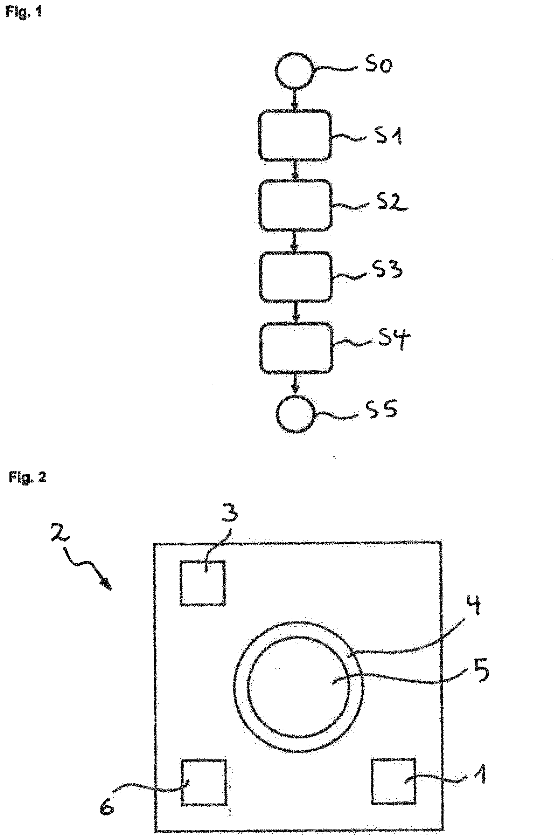

In der Figur 1 ist der Ablauf des erfindungsgemäßen Verfahrens gezeigt, mittels dem die Bestimmung von Informationen über einen Entwässerungsvorgang eines Filterkuchens in einem Filtersystem eines wasserführenden Haushaltsgeräts (siehe Figur 2) erfolgt.

Das erfindungsgemäße Verfahren sieht in einem ersten Schritt S1 das Empfangen eines Entwässerungsbefehls zur Entwässerung des Filterkuchens (d.h. von Partikeln) vor. Der erste Schritt S1 erfolgt nach einem Start S0 des Verfahrens.

In einem darauffolgenden zweiten Schritt S2 sieht das erfindungsgemäße Verfahren das Durchführen oder zumindest das Initiieren des Entwässerungsvorgangs vor, um den Filterkuchen zu entwässern oder den Entwässerungsvorgang zu starten.

In einem darauffolgenden dritten Schritt S3 sieht das erfindungsgemäße Verfahren das Detektieren des aus dem Filtersystem austretenden Filtrats, um Filtratinformationen zu erlangen, vor.

In einem darauffolgenden vierten Schritt S4 sieht das erfindungsgemäße Verfahren das Bestimmen von Informationen über den Entwässerungsvorgang basierend auf den Filtratinformationen vor.

Nach dem vierten Schritt S4 endet das Verfahren mit einem Ende S5.

Nach der Bestimmung von Informationen über den Entwässerungsvorgang basierend auf den Filtratinformationen können nachfolgende Prozesse freigegeben werden.

In der Figur 2 ist ein Ausschnitt einer Ausführungsform eines erfindungsgemäßen wasserführenden Haushaltsgeräts 2 in stark vereinfachter schematischer Darstellung gezeigt. Das wasserführende Haushaltsgerät 2 ist als Wäschepflegegerät ausgestaltet.

Das wasserführende Haushaltsgerät 2 weist eine Waschtrommel 5 auf. Ferner ist ein Laugenbehälter 4 umfasst, der um die Waschtrommel 5 angeordnet ist. Der Laugenbehälter 4 kann auch als Fluidtank bezeichnet werden und vorgesehen sein.

Die Waschtrommel 5 ist rotierbar in dem wasserführenden Haushaltsgerät 2, insbesondere Wäschepflegegerät, angeordnet und fluidtechnisch mit dem Laugenbehälter 4 verbunden. Bei einem Schleudervorgang werden Flusen und dergleichen Partikel, beispielsweise auch Mikroplastik, freigesetzt, die zur Vermeidung von Beschädigungen des wasserführenden Haushaltsgeräts 2 abfiltriert werden müssen.

Das wasserführende Haushaltsgerät 2 weist hierzu ein Filtersystem 1 auf. Das Filtersystem 1 kann als Filtereinheit bezeichnet werden. Das Filtersystem 1 filtert Partikel, beispielsweise Flusen, unter Bildung eines Filterkuchens. Der Filterkuchen bleibt dabei in dem Filtersystem 1 zurück und kann manuell entfernt werden. Vorzugsweise ist ein hier nicht näher dargestellter Filterbeutel vorgesehen, der in dem Filtersystem 1, insbesondere der Filtereinheit, herausnehmbar angeordnet ist und in dem die Partikel gesammelt werden.

Beim Entwässerungsvorgang werden die gesammelten Partikel unter Ausbildung eines Filterkuchens weiter entwässert. Der Entwässerungsvorgang erfolgt mittels Auspressen. Der Filterkuchen wird sodann gleichermaßen mittels Auspressen weiter entwässert, bis er vorzugsweise wasserfrei oder nahezu wasserfrei ist. Der Entwässerungsvorgang, der damit auch als Filterauspressvorgang bezeichnet werden kann, ist insofern von Bedeutung, als dass ein Schleudervorgang, bei dem üblicherweise ein erhöhtes Partikelaufkommen erzeugt wird, erst initiiert wird, wenn das Filtersystem 1 regeneriert ist. Eine Regenerierung des Filtersystems 1 kann auch als Reinigung des Filtersystems 1 bzw. Filterreinigung bezeichnet werden.

Beim Aufkommen einer erhöhten Konzentration an Partikeln, insbesondere Flusen, ist es demnach wünschenswert, eine schnelle Möglichkeit zum Abtransport schaffen. Hierzu erfolgt das Detektieren, wann ein Entwässerungsvorgang Filterauspressvorgang abgeschlossen ist. Die Detektion erfolgt mittels Detektiereinheit 6, die vorliegend als Drucksensor ausgestaltet ist. Die Detektiereinheit 6 kann auch beispielsweise in dem Laugenbehälter (nicht gezeigt) angeordnet sein.

Beim Entwässerungsvorgang bzw. während des Entwässerungsvorgangs fließt im Filtersystem 1 befindliches Wasser in den Laugenbehälter 4, wodurch dessen Füllstand mit der der Entwässerung des Filtersystems 1 proportional steigt. Durch das Detektieren des Füllstands bzw. des Wasserpegels in dem Laugenbehälter 4 durch die Detektiereinheit 6 kann bestimmt werden, ob der Entwässerungsvorgang abgeschlossen ist. Der Entwässerungsvorgang kann dabei als abgeschlossen gelten, wenn der Füllstand in dem Laugenbehälter 4 konstant oder im Wesentlichen konstant bleibt, zumindest nicht weiter ansteigt.

Der Entwässerungsvorgang erfolgt durch eine nicht näher dargestellte Entwässerungseinheit, insbesondere durch ein volumenveränderliches Verdrängungsmittel. Das volumenveränderliche Verdrängungsmittel ist zumindest teilweise in dem Filtersystem vorgesehen (nicht gezeigt).

Das wasserführende Haushaltsgerät umfasst ferner zumindest eine Steuereinheit 3.

Erfindungsgemäß wird somit durch Messung des Wasserstands im Laugenbehälter 4 auf einen Entwässerungsgrad bzw. auf einen Kompaktierungsvorgang des Filtersystems 1 rückgeschlossen.

Optional kann eine Pumpeinheit vorgesehen sein, mittels der Partikel in einer ersten Filterstufe aufkonzentriert und zu einer Reinigung zu einer zweiten Filterstufe transportiert, gepumpt werden können (nicht gezeigt).

### Bezugszeichenliste

- 1: Filtersystem
- 2: wasserführendes Haushaltsgerät
- 3: Steuereinheit
- 4: Laugenbehälter
- 5: Waschtrommel
- 6: Detektiereinheit

- 50: Start
- S1: Erster Schritt
- S2: Zweiter Schritt
- S3: Dritter Schritt
- S4: Vierter Schritt
- S5: Ende

## Patentansprüche

1. Computerimplementiertes Verfahren zur Bestimmung von Informationen über einen Entwässerungsvorgang von Partikeln in einem Filtersystem (1) eines wasserführenden Haushaltsgeräts (2), umfassend:
Empfangen eines Entwässerungsbefehls zur Entwässerung der Partikel,
Durchführen oder zumindest initiieren des Entwässerungsvorgangs, um die Partikel zu entwässern oder einen Entwässerungsvorgang zu starten,
Detektieren des aus dem Filtersystem (2) austretenden Filtrats, um Filtratinformationen zu erlangen,
Bestimmen von Informationen über den Entwässerungsvorgang basierend auf den Filtratinformationen.

2. Verfahren nach Anspruch 1, wobei das Detektieren des Filtrats mittels Durchflussmessung, mittels Volumenmessung, Konduktivmessung und/oder Ultraschallmessung erfolgt.

3. Verfahren nach einem der vorhergehenden Ansprüche, wobei das Detektieren des Filtrats durch Überwachung eines Fluidlevels in einem dem Filtersystem nachgelagerten Behälters erfolgt, wobei das Filtrat dem Behälter zugeführt wird.

4. Verfahren nach einem der vorhergehenden Ansprüche, wobei das Bestimmen von Informationen über den Entwässerungsvorgang eine Berücksichtigung einer Änderung der Filtratinformationen umfasst.

5. Verfahren nach einem der vorhergehenden Ansprüche, wobei das Verfahren umfasst: ausgeben eines Freigabebefehls basierend auf den Informationen über den Entwässerungsvorgang.

6. Verfahren nach einem der vorhergehenden Ansprüche, wobei das Durchführen des Entwässerungsvorgangs mittels einem volumenveränderlichem Verdrängungsmittel erfolgt.

7. Verfahren nach einem der vorhergehenden Ansprüche, wobei das aus dem Filtersystem austretende Fluid in Abständen von 0,5 s bis 2 s, vorzugsweise in einem Beriech von 1 s bis 2 s detektiert wird.

8. Computerprogramm umfassend Programmcode, der, wenn er auf einer Steuereinheit ausgeführt wird, die Steuereinheit dazu veranlasst, das Verfahren gemäß einem der Ansprüche 1 bis 7 auszuführen.

9. Wasserführendes Haushaltsgerät (2), aufweisend zumindest ein Filtersystem (1) und eine Steuereinheit (3), welche dazu ausgestaltet ist, das Verfahren gemäß einem der Ansprüche 1 bis 7 auszuführen.

10. Wasserführendes Haushaltsgerät (2) gemäß Anspruch 9, ferner umfassend einen Laugenbehälter, welchem Filtrat aus dem Filtersystem zugeführt werden kann, und ein Füllstandssensor, der dazu ausgestaltet ist, einen Fluidlevel in dem Laugenbehälter zu überwachen, wobei die Steuereinheit dazu ausgestaltet ist, basierend auf dem Fluidlevel das aus dem Filtersystem (2) austretende Filtrat zu detektieren
